# FASCICULE DE BREVET EUROPEEN

(11) **EP 0 562 899 B1**
(45) Date de publication et mention de la délivrance du brevet: **24.01.1996**
(21) Numéro de dépôt: 93400619.8
(22) Date de dépôt: 11.03.1993
(51) Int. Cl.: B64C 27/00, F16M 11/04, F16F 15/04

(54) **Dispositif de visée pour aéronef à voilure tournante**
Visiervorrichtung für Drehflügelflugzeug
Sight device for a rotorcraft

(30) Priorité: 24.03.1992 FR 9203529
(43) Date de publication de la demande: 29.09.1993
(73) Titulaire: EUROCOPTER FRANCE, Société Anonyme dite:, F-13725 Marignane Cédex (FR)
(72) Inventeur: Jalaguier, Jean Pierre, F-13127 Vitrolles (FR); Krysinski, Tomasz, F-13008 Marseille (FR)
(74) Mandataire: Bonnetat, Christian

(56) Documents cités:
- EP-A- 0 064 346
- FR-A- 2 596 834
- GB-A- 2 157 394
- US-A- 4 275 992

## Description

La présente invention concerne un dispositif de visée pour aéronef à voilure tournante, et plus particulièrement un hélicoptère, comportant un moyeu creux de rotor, sur lequel sont montées radialement des pales constituant ladite voilure tournante et qui est relié à la boîte de transmission principale de l'aéronef par un arbre d'entraînement coaxial au rotor, ledit dispositif de visée comportant une tête de visée non tournante montée, par l'intermédiaire d'un support, à l'extrémité supérieure libre d'un mât non tournant disposé coaxialement à l'intérieur dudit moyeu et dudit arbre d'entraînement du rotor, mât dont l'autre extrémité est fixée dans le fond de la boîte de transmission principale, un palier à roulements coaxial à l'axe rotor étant prévu entre ledit moyeu et ledit mât.

Dans un tel dispositif, il est important d'adapter dynamiquement la structure de liaison de la tête de visée sur le moyeu, laquelle tête de visée est soumise à des vibrations du fait de son montage au sommet d'un mât solidarisé à un moyeu rotor susceptible d'être soumis à des vibrations, et cela pour obtenir un niveau vibratoire suffisamment faible de la tête de visée permettant un fonctionnement correct des organes opto-électroniques qu'elle contient. Jusqu'à présent, ce problème d'adaptation dynamique de la structure de liaison de la tête de visée sur le moyeu n'a pas été résolu de façon satisfaisante par l'assouplissement ou la rigidification des pièces constituant cette structure de liaison.

La présente invention concerne un dispositif de visée agencé pour fournir une meilleure adaptation dynamique de la structure de liaison de la tête de visée sur le moyeu de façon à réduire sa réponse aux excitations vibratoires générées par le rotor en rotation.

A cet effet, des moyens de suspension, destinés à filtrer les excitations en roulis et en tangage auxquelles est soumise ladite tête de visée, sont prévus entre la base du support de la tête de visée et l'extrémité supérieure du mât.

On réduit ainsi le niveau vibratoire transmis à la tête de visée en roulis et en tangage.

Le dispositif de visée, du type décrit ci-dessus, est remarquable, selon l'invention, en ce que lesdits moyens de suspension comprennent une rotule en forme de zone sphérique dont le centre est situé sur l'axe du rotor et comportant de la matière souple fixée entre deux armatures interne et externe, ladite armature externe étant solidaire de la base du support de la tête de visée et ladite armature interne étant solidaire de l'extrémité supérieure du mât. On obtient ainsi la filtration des moments dynamiques de roulis et de tangage de la tête de visée par cisaillement de la matière souple fixée entre deux armatures constituées par des zones sphériques de même centre.

Dans le cas où il est souhaitable d'accroître la souplesse angulaire de la rotule tout en conservant à cette dernière une grande rigidité radiale, la couche de matière souple fixée entre les deux armatures interne et externe est du type lamifié et est constituée d'une pluralité de couches de matière souple intercalées entre des coupelles sphériques rigides ayant même centre que la rotule, sur lesquelles coupelles lesdites couches de matière souple sont adhérisées. On peut également prévoir, toutefois, une couche monolithique d'épaisseur constante adhérisée respectivement sur les surfaces externe et interne desdites armatures.

En particulier, ladite matière souple peut être un élastomère ayant éventuellement une capacité de dissipation d'énergie.

De préférence, ladite rotule est couplée à une membrane en forme de couronne circulaire dans un plan sensiblement parallèle au plan du rotor, fixée, d'une part, à sa périphérie interne, à l'extrémité supérieure du mât et, d'autre part, à sa périphérie externe, à la base du support de la tête de visée, ladite membrane étant rigide dans son propre plan pour transmettre les moments autour de l'axe de lacet et les efforts coplanaires, mais permettant grâce à sa souplesse en flexion des oscillations angulaires autour des axes de roulis et de tangage et les déplacements suivant l'axe de lacet autorisés par la souplesse axiale relative de ladite rotule. La position en lacet de la tête de visée est donc transmise par ladite membrane, pratiquement sans déformation angulaire.

Avantageusement, ladite membrane est fixée à l'extrémité supérieure du mât et à la base du support de la tête de visée par l'intermédiaire desdites armatures interne et externe, respectivement.

Pour accroître sa souplesse, ladite membrane peut comporter au moins une nervure circulaire. Par ailleurs, ladite membrane est avantageusement une membrane métallique.

De plus, le dispositif peut comprendre un moyen de butée, constitué par un épaulement disposé à la base du support de la tête de visée et qui vient appuyer la membrane sur l'armature interne de la rotule lors d'oscillations angulaires autour des axes de roulis et de tangage de la tête de visée.

Les figures du dessin annexé feront bien comprendre comment l'invention peut être réalisée.

La figure 1 est une vue en coupe d'un dispositif de visée pour voilure tournante d'aéronef selon l'invention.

La figure 2 montre, à plus grande échelle, la base du support de la tête de visée et l'extrémité supérieure du mât, avec les moyens de suspension selon l'invention.

La figure 3 est une vue en coupe d'une variante de la rotule en forme de zone sphérique suivant l'invention, dans laquelle la matière souple de la rotule est du type lamifié, constituée par deux couches de matière souple adhérisées sur une coupelle sphérique rigide intercalaire.

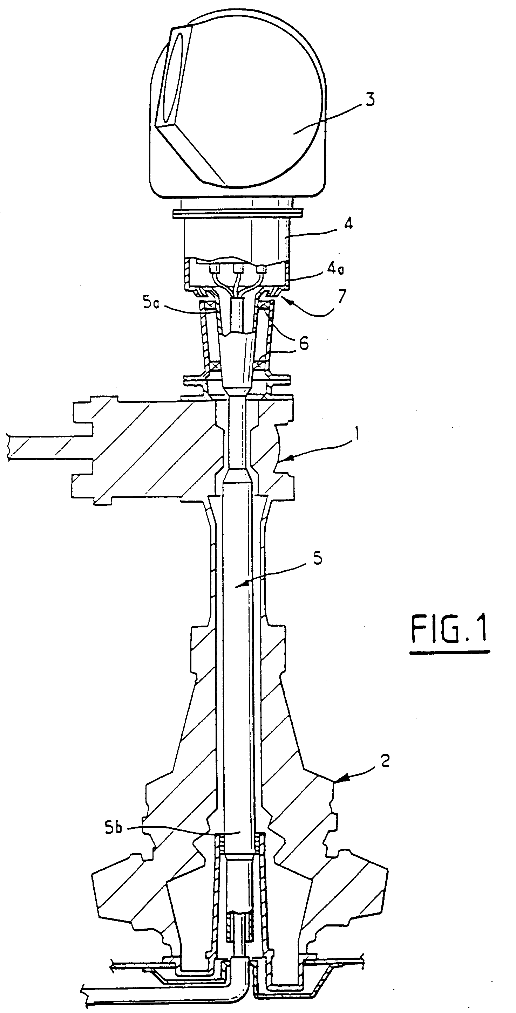

Comme on le voit sur la figure 1, le dispositif de visée est destiné à être monté sur le rotor d'un aéronef à voilure tournante (non représenté), tel qu'un hélicoptère, qui présente un moyeu creux 1 de rotor, représenté de façon très schématique, sur lequel sont montées radialement des pales (non représentées) et qui est supporté et entraîné en rotation par la boîte de transmission principale 2 de l'aéronef. Le dispositif de visée comporte, comme cela est usuel, une tête de visée 3 montée, par l'intermédiaire d'un support 4, à l'extrémité supérieure libre 5a d'un mât 5 disposé coaxialement à l'intérieur du moyeu 1, mât dont l'autre extrémité 5b est fixée dans le fond du carter de la boîte de transmission principale. Par ailleurs, un palier constitué de deux roulements à billes 6 est prévu entre le moyeu 1 tournant et le mât 5 non tournant.

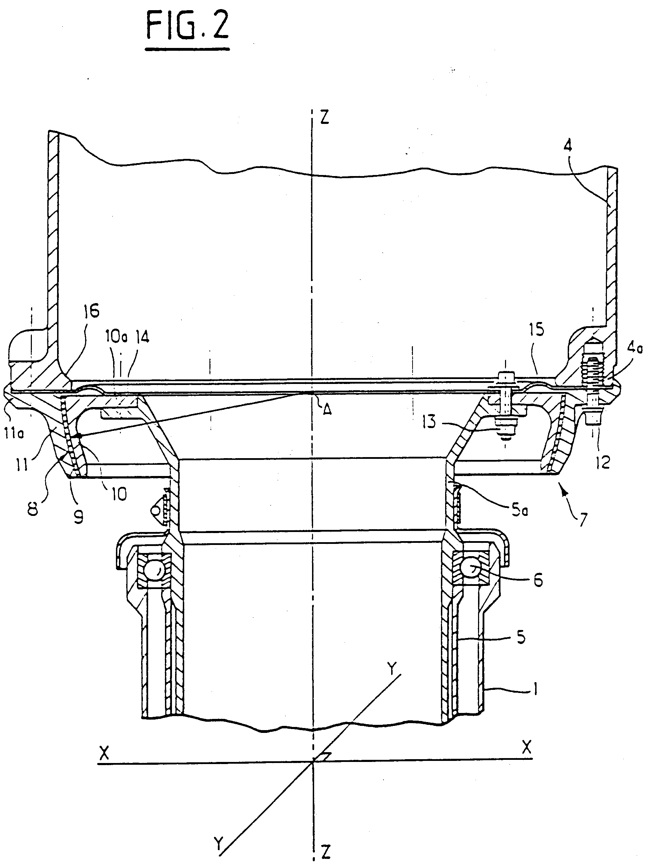

Plus particulièrement, selon l'invention, des moyens de suspension 7, destinés à filtrer les excitations en roulis (autour de l'axe X-X de la figure 2) et en tangage (autour de l'axe Y-Y de la figure 2) auxquelles est soumise la tête de visée 3, sont prévus entre la base 4a du support 4 de la tête de visée 3 et l'extrémité supérieure 5a du mât 5.

Sur la figure 2, on voit que les moyens de suspension 7 comprennent, dans cet exemple de réalisation, une rotule 8 en forme de zone sphérique de centre A situé sur l'axe rotor, ladite zone sphérique étant parallèle au plan défini par les axes X-X et Y-Y, et comportant une couche 9 de matière souple, notamment un élastomère ayant éventuellement une capacité de dissipation d'énergie, fixée entre deux armatures interne 10 et externe 11, par exemple métalliques (la couche d'élastomère pouvant être adhérisée aux armatures 10 et 11 notamment par collage ou vulcanisation).

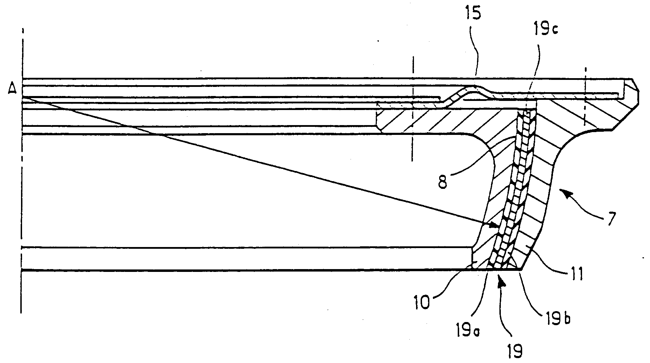

Sur la figure 3, on voit que les moyens de suspension 7 comprennent, dans cette variante de réalisation de la rotule 8, une couche souple 19, lamifiée, adhérisée aux faces internes des deux armatures interne 10 et externe 11, ladite couche 19 étant constituée de deux couches 19a et 19b de matière souple, notamment un élastomère, disposées de part et d'autre d'une coupelle sphérique rigide 19c, par exemple métallique, avec laquelle elles sont adhérisées par vulcanisation ou collage.

L'armature externe 11 est solidaire de la base 4a du support 4 de la tête de visée 3, en pouvant y être fixée par des vis 12 traversant un rebord circulaire 11a de l'armature 11, en saillie vers l'extérieur, les vis 12 pouvant être angulairement équi-réparties autour dudit rebord 11a. De façon analogue, l'armature interne 10 est solidaire de l'extrémité supérieure 5a du mât 5, en pouvant y être fixée par des vis 13 traversant un rebord circulaire 10a de l'armature 10, en saillie vers l'intérieur, les vis 13 pouvant être de même angulairement équi-réparties autour dudit rebord 10a.

Par ailleurs, la rotule 8 est couplée à une membrane 14, notamment métallique, en forme de couronne circulaire, fixée, d'une part, à sa périphérie interne, à l'extrémité supérieure 5a du mât 5 et, d'autre part, à sa périphérie externe, à la base 4a du support 4 de la tête de visée 3, la membrane 14 étant rigide dans son propre plan pour transmettre les moments autour de l'axe de lacet Z-Z et les efforts coplanaires, mais permettant grâce à sa souplesse en flexion (accrue par une ou plusieurs nervures circulaires 15) des oscillations angulaires autour des axes de roulis X-X et de tangage Y-Y et, si nécessaire, les déplacements suivant l'axe de lacet Z-Z autorisés par la souplesse axiale de la rotule 8.

Comme on le voit sur la figure 2, la membrane 14 est fixée à l'extrémité supérieure 5a du mât 5 et à la base 4a du support 4 de la tête de visée 3 par l'intermédiaire des armatures interne 10 et externe 11, respectivement, et cela grâce aux vis 12 et 13 déjà mentionnées.

En outre, le dispositif de visée comprend un moyen de butée, constitué par un épaulement 16 disposé à la base 4a du support 4 de la tête de visée 3 et qui vient appuyer la membrane 14 sur l'armature interne 10 de la rotule 8 lors d'oscillations angulaires autour des axes de roulis X-X et de tangage Y-Y de la tête de visée 3.

Ainsi, les moyens de suspension selon l'invention permettent de filtrer les moments dynamiques de roulis et de tangage de la tête de visée par cisaillement de la ou des couches d'élastomère fixées entre deux armatures constituées par des zones sphériques de même centre. En revanche, le moment de lacet de la tête de visée est transmis avantageusement d'une armature à l'autre par la membrane, pratiquement sans déformation angulaire.

## Revendications

1. Dispositif de visée pour aéronef à voilure tournante comportant un moyeu creux (1) de rotor, sur lequel sont montées radialement des pales constituant ladite voilure tournante et qui est relié à la boîte de transmission principale (2) par un arbre d'entraînement coaxial au rotor de l'aéronef, ledit dispositif de visée comportant une tête de visée (3) non tournante montée, par l'intermédiaire d'un support (4), à l'extrémité supérieure libre (5a) d'un mât (5) non tournant disposé coaxialement à l'intérieur dudit moyeu (1) et dudit arbre d'entraînement du rotor, mât dont l'autre extrémité (5b) est fixée dans le fond de la boîte de transmission principale (2), un palier à roulements (6) coaxial à l'axe rotor étant prévu entre ledit moyeu (1) et ledit mât (5), tandis que des moyens de suspension (7), destinés à filtrer les excitations en roulis et en tangage auxquelles est soumise ladite tête de visée (3), sont prévus entre la base (4a) du support (4) de la tête de visée (3) et l'extrémité supérieure (5a) du mât (5),
caractérisé en ce que lesdits moyens de suspension (7) comprennent une rotule (8) en forme de zone sphérique dont le centre (A) est situé sur l'axe du rotor et comportant de la matière souple (9,19) fixée entre deux armatures interne (10) et externe (11), ladite armature externe (11) étant solidaire de la base (4a) du support (4) de la tête de visée (3) et ladite armature interne (10) étant solidaire de l'extrémité supérieure (5a) du mât (5).

2. Dispositif selon la revendication 1,
caractérisé en ce que la matière souple fixée entre les deux armatures interne (10) et externe (11) forme une couche monolithique (9) d'épaisseur constante adhérisée respectivement sur les surfaces externe et interne des armatures (10) et (11).

3. Dispositif selon la revendication 1,
caractérisé en ce que la matière souple (19) fixée entre les deux armatures interne (10) et externe (11) est lamifiée et constituée d'une pluralité de couches (19a,19b) de matière souple d'épaisseur constante intercalées entre des coupelles sphériques (19c) rigides ayant même centre que la rotule et sur les surfaces internes et externes desquelles lesdites couches de matière souple sont adhérisées.

4. Dispositif selon l'une des revendications 1 à 3,
caractérisé en ce que ladite matière souple est un élastomère.

5. Dispositif selon l'une quelconque des revendications 1 à 4,
caractérisé en ce que ladite rotule (8) est couplée à une membrane (14) en forme de couronne circulaire dans un plan sensiblement parallèle au plan du rotor, fixée, d'une part, à sa périphérie interne, à l'extrémité supérieure (5a) du mât (5) et, d'autre part, à sa périphérie externe, à la base (4a) du support (4) de la tête de visée (3), ladite membrane (14) étant rigide dans son propre plan pour transmettre les moments autour de l'axe de lacet (Z-Z) et les efforts coplanaires, mais permettant grâce à sa souplesse en flexion des oscillations angulaires autour des axes de roulis (X-X) et de tangage (Y-Y) et les déplacements suivant l'axe de lacet (Z-Z) autorisés par la souplesse axiale relative de ladite rotule (8).

6. Dispositif selon la revendication 5,
caractérisé en ce que ladite membrane (14) est fixée à l'extrémité supérieure (5a) du mât (5) et à la base (4a) du support (4) de la tête de visée (3) par l'intermédiaire desdites armatures interne (10) et externe (11), respectivement.

7. Dispositif selon la revendication 5 ou la revendication 6,
caractérisé en ce que ladite membrane (14) comporte au moins une nervure circulaire (15).

8. Dispositif selon l'une quelconque des revendications 5 à 7,
caractérisé en ce que ladite membrane (14) est une membrane métallique.

9. Dispositif selon l'une quelconque des revendications 6 à 8,
caractérisé en ce qu'il comprend un moyen de butée, constitué par un épaulement (16) disposé à la base (4a) du support (4) de la tête de visée (3) et qui vient appuyer la membrane (14) sur l'armature interne (10) de la rotule (8) lors d'oscillations angulaires autour des axes de roulis (X-X) et de tangage (Y-Y) de la tête de visée (3).

## Claims

1. Gunsight device for a rotating-wing aircraft having a hollow rotor hub (1), on which there are radially mounted blades constituting the said rotating wing, and which is connected to the main transmission box (2) by a driveshaft coaxial with the rotor of the aircraft, the said gunsight device comprising a non-rotating gunsight head (3) mounted, by means of a support (4), at the free upper end (5a) of a non-rotating mast (5) arranged coaxially inside the said hub (1) and the said driveshaft of the rotor, the other end (5b) of which mast is fixed into the bottom of the main transmission box (2), a rolling-contact bearing (6) coaxial with the rotor axis being provided between the said hub (1)and the said mast (5), whilst suspension means (7), intended to filter out the excitations in roll and in pitch to which the said gunsight head (3) is subjected, are provided between the base (4a) of the support (4) of the gunsight head (3) and the upper end (5b) of the mast (5), characterized in that the said suspension means (7) comprise a swivel (8) in the form of a spherical zone whose centre is situated on the axis of the rotor and comprising flexible material (9, 19) fixed between two internal (10) and external (11) reinforcements, the said external reinforcement (11) being securely fastened to the base (4a) of the support (4) of the gunsight head (3) and the said internal reinforcement (10) being securely fastened to the upper end (5a) of the mast (5).

2. Device according to Claim 1, characterized in that the flexible material fixed between the two internal (10) and external (11) reinforcements forms a monolithic layer (9) of constant thickness bonded onto the external and internal surfaces respectively of the reinforcements (10) and (11).

3. Device according to Claim 1, characterized in that the flexible material (19) fixed between the two internal (10) and external (11) reinforcements is laminated and consists of a plurality of layers (19a, 19b) of flexible material of constant thickness interposed between rigid spherical caps (19c) having the same centre as the swivel and onto the internal and external surfaces of which the said layers of flexible material are bonded.

4. Device according to one of Claims 1 to 3, characterized in that the said flexible material is an elastomer.

5. Device according to any one of Claims 1 to 4, characterized in that the said swivel (8) is coupled to a membrane (14) in the form of a circular ring in a plane substantially parallel to the plane of the rotor, fixed, on the one hand, at its internal periphery, to the upper end (5a) of the mast (5) and, on the other hand, at its external periphery, to the base (4a) of the support (4) of the gunsight head (3), the said membrane (14) being rigid in its own plane in order to transmit the moments about the axis of yaw (Z-Z) and the coplanar forces, but, by virtue of its flexibility in flexion, permitting angular oscillations about the axes of roll (X-X) and of pitch (Y-Y), and the displacements along the axis of yaw (Z-Z) permitted by the relative axial flexibility of the said swivel (8).

6. Device according to Claim 5, characterized in that the said membrane (14) is fixed to the upper end (5a) of the mast (5) and to the base (4a) of the support (4) of the gunsight head (3) by means of the said internal (10) and external (11) reinforcements respectively.

7. Device according to Claim 5 or Claim 6, characterized in that the said membrane (14) comprises at least one circular rib (15).

8. Device according to any one of Claims 5 to 7, characterized in that the said membrane (14) is a metal membrane.

9. Device according to any one of Claims 6 to 8, characterized in that it comprises a stop means consisting of a shoulder (16) arranged at the base (4a) of the support (4) of the gunsight head (3) and which comes to press the membrane (14) onto the internal reinforcement (10) of the swivel (8) during angular oscillations of the gunsight head (3) around the axes of roll (X-X) and of pitch (Y-Y).

## Patentansprüche

1. Visiervorrichtung für ein Drehflügelflugzeug, das eine hohle Rotornabe (1) besitzt, an der den Drehflügel bildende Rotorblätter radial angebracht sind und die durch eine zum Rotor des Luftfahrzeugs koaxiale Antriebswelle mit dem Hauptgetriebegehäuse (2) verbunden ist, wobei die Visiervorrichtung einen nicht drehenden Visierkopf (3) besitzt, der mittels eines Trägers (4) an dem freien oberen Ende (5a) eines nicht drehenden Stiels (5) angebracht ist, der koaxial im Inneren der Nabe (1) und der Antriebswelle des Rotors angeordnet ist und dessen anderes Ende (5b) im Boden des Hauptgetriebegehäuses (2) befestigt ist, wobei ein zur Rotorachse koaxiales Wälzlager (6) zwischen der Nabe (1) und dem Stiel (5) vorgesehen ist, während Tragmittel (7), die dazu bestimmt sind, die Roll- und Nickerregungen zu filtern, denen der Visierkopf (3) ausgesetzt ist, zwischen der unteren Partie (4a) des Trägers (4) des Visierkopfes (3) und dem oberen Ende (5a) des Stiels (5) vorgesehen sind, dadurch gekennzeichnet, daß die Tragmittel (7) ein Kugelgelenk (8) in Form einer kugeligen Zone umfassen, dessen Zentrum (A) auf der Achse des Rotors liegt und das elastisches Material (9, 19) aufweist, das zwischen einem inneren und einem äußeren Beschlag (10 bzw. 11) befestigt ist, wobei der äußere Beschlag (11) mit der unteren Partie (4a) des Trägers (4) des Visierkopfes (3) und der innere Beschlag (10) mit dem oberen Ende (5a) des Stiels (5) fest verbunden ist.

2. Vorrichtung nach Anspruch 1, dadurch gekennzeichnet, daß das zwischen den beiden Beschlägen (10, 11) befestigte elastische Material eine monolithische Schicht (9) konstanter Dicke bildet, die auf der Außen-und Innenfläche der Beschläge (10 bzw. 11) fest haftet.

3. Vorrichtung nach Anspruch 1, dadurch gekennzeichnet, daß das zwischen den beiden Beschlägen (10, 11) befestigte elastische Material (19) laminiert ist und aus einer Vielzahl von Schichten (19a, 19b) aus elastischem Material konstanter Dicke besteht, die zwischen starre sphärische Schalen (19c) eingelegt sind, die das gleiche Zentrum wie das Kugelgelenk haben und an deren Außen- und Innenflächen die Schichten aus elastischem Material fest haften.

4. Vorrichtung nach einem der Ansprüche 1 bis 3, dadurch gekennzeichnet, daß das elastische Material ein Elastomer ist.

5. Vorrichtung nach einem der Ansprüche 1 bis 4, dadurch gekennzeichnet, daß das Kugelgelenk (8) an eine Membran (14) in Form einer kreisförmigen Ringscheibe in einer zur Ebene des Rotors im wesentlichen parallelen Ebene gekoppelt ist, die einerseits mit ihrem inneren Umfang an dem oberen Ende (5a) des Stiels (5) und andererseits mit ihrem äußeren Umfang an der unteren Partie (4a) des Trägers (4) des Visierkopfes (3) befestigt ist, wobei die Membran (14) in ihrer eigentlichen Ebene starr ist, um die Momente bezüglich der Gierachse (Z-Z) und die koplanaren Belastungskräfte zu übertragen, aber aufgrund ihrer Biegeelastizität Winkeloszillationen um die Roll- (X-X) und die Nickachse (Y-Y) und Verlagerungen in der Gierachse (Z-Z) gestattet, die von der axialen Elastizität relativ zum Kugelgelenk (8) zugelassen werden.

6. Vorrichtung nach Anspruch 5, dadurch gekennzeichnet, daß die Membran (14) am oberen Ende (5a) des Stiels (5) und an der unteren Partie (4a) des Trägers (4) des Visierkopfes mittels des inneren (10) bzw. des äußeren (11) Beschlages befestigt ist.

7. Vorrichtung nach Anspruch 5 oder Anspruch 6, dadurch gekennzeichnet, daß die Membran (14) wenigstens eine kreisförmige Sicke (15) besitzt.

8. Vorrichtung nach einem der Ansprüche 5 bis 7, dadurch gekennzeichnet, daß die Membran (14) eine Metallmembran ist.

9. Vorrichtung nach einem der Ansprüche 6 bis 8, dadurch gekennzeichnet, daß sie ein Anschlagmittel umfaßt, das aus einer an der unteren Partie (4a) des Trägers (4) des Visierkopfes (3) angeordneten Schulter (16) besteht und das bei Winkeloszillationen um die Roll- (X-X) und Nickachse (Y-Y) des Visierkopfes (3) die Membran (14) auf dem inneren Beschlag (10) des Kugelgelenks (8) abstützt.
